# EUROPEAN PATENT SPECIFICATION

(11) **EP 2 982 533 B1**
(45) Date of publication and mention of the grant of the patent: **16.12.2020**
(21) Application number: 15180097.6
(22) Date of filing: 07.08.2015
(51) Int. Cl.: B60K 17/04

(54) **PLANETARY GEAR DRIVE**
PLANETENGETRIEBE
ENTRAÎNEMENT À ENGRENAGE PLANÉTAIRE

(30) Priority: 08.08.2014 BE 201400606
(43) Date of publication of application: 10.02.2016
(73) Proprietor: Amda bvba, 1933 Sterrebeek (BE)
(72) Inventor: Geerkens, Marc, 1933 Sterrebeek (BE)
(74) Representative: Pappaert, Kris

(56) References cited:
- EP-A2- 2 416 027
- US-A- 3 459 070
- US-A- 3 770 075
- US-A- 4 043 226
- US-A- 5 267 915
- US-A1- 2002 125 060

## Description

### TECHNICAL FIELD

The invention concerns a planetary gear drive suitable for driving machines in the so-called off-road segment, including agriculture. The invention also relates to a towed or transported machine comprising the planetary gear drive used as an auxiliary drive. The invention also relates to a method for coupling a planetary gear drive of a towed machine and for decoupling it, i.e. putting it into free-wheel.

### TECHNOLOGICAL BACKGROUND OF THE INVENTION

Planetary gear drives are often used to drive machines and vehicles. Such reduction gears are specifically developed for slow-rotating applications, wherein a high torque is required at a low rotation speed. Typical applications are found in excavators for driving tracks, or for swivelling, for example in agriculture, such as a potato or beet harvester, or a field sprayer. A planetary gear drive is typically selected with the correct reduction ratio and hydraulic or electric motor. At the working speed in the field, around 7 kph (km/h), this motor and the gear wheels rotate ideally at around 300 rpm. When used on the road, the motor must be decoupled, otherwise the motor would act as a pump or generator, which could damage it. Decoupling the motor alone is however not sufficient, since on the road speeds of up to 50 kph are still reached, whereby the gear wheels can be rotating at up to 20,000 rpm. This creates secondary wear and can lead to breakage. There is therefore a need for a planetary gear drive suitable for driving a machine towed by a vehicle which works at low speeds in the field and can be towed at higher speeds on the road without excessive wear. EP 2 416 027 A2 discloses all of the features of the preamble of claim 1.

### SUMMARY

The invention and preferred embodiments thereof offer a solution for one or more of the above needs.

In a first aspect, the invention comprises a planetary gear drive, preferably suitable for driving a machine via a vehicle, comprising
- a central shaft;
- a first coupling bush, wherein the first coupling bush is configured to drive the central shaft via the vehicle, preferably via a motor of the vehicle;
- a sun wheel coupled to the central shaft;
- one or more planetary systems comprising a satellite carrier and two or more satellite wheels, wherein the one or more planetary systems are configured to be driven by the central shaft via the sun wheel for one of the one or more planetary systems;
- a wheel spindle and a wheel flange;
- optionally a brake; and
- a second coupling bush, wherein the second coupling bush is configured to couple the satellite carrier of the one or more planetary systems to the wheel spindle and to decouple it from the wheel spindle.

As used herein the wheel spindle is generally mounted to a fixed structure such as a vehicle frame, using mounting bolts. The wheel flange as used herein refers to a structure to which the wheel is attached.

As the present invention relates to drive wheels, the wheel flanges can be mechanically coupled to the wheel spindle through the second coupling bush, thereby creating a mechanism to rotate the wheel flange relative to the wheel spindle, thereby driving the wheel and turning it with a high torque.

Upon decoupling the wheel spindle from the wheel flange (by shifting the second coupling bush) the wheel becomes a free spinning wheel that does not drive the vehicle. The wheels and wheel flanges turn as one assembly together with the planetary system. The different satellite carriers and satellite wheels are not driven but turn together with the wheel and the wheel flange.

In a preferred embodiment, the second coupling bush is configured such that when the satellite carrier is coupled to the wheel spindle, rotation of the central shaft relative to the wheel spindle leads to rotation of the wheel flange relative to the wheel spindle, wherein the ratio is determined by the one or more planetary systems.

In a preferred embodiment, the second coupling bush is configured such that when the satellite carrier is decoupled from the wheel spindle, rotation of the central shaft relative to the wheel spindle does not lead to rotation of the wheel flange relative to the wheel spindle.

In a first aspect, the second coupling bush is configured to decouple the satellite carrier from the wheel spindle by means of a linear shift of the second coupling bush relative to the satellite carrier.

In a preferred embodiment, the linear shift is parallel to the central shaft. In a first aspect, the planetary gear drive comprises a linear actuator configured to shift the second coupling bush linearly relative to the satellite carrier.

In a preferred embodiment, the planetary gear drive comprises a first planetary system, a second planetary system, optionally a third planetary system, and a gear wheel which couples the first planetary system to the second planetary system, wherein the first planetary system is configured to be driven by the central shaft via the sun wheel, and wherein the secondary planetary system is configured to be driven by the first planetary system by means of the gear wheel (preferably a central gear wheel); optionally an additional gear wheel (preferably a central gear wheel) which couples the second planetary system to the third planetary system, and wherein the third planetary system is configured to be driven by the second planetary system by means of the additional gear wheel (preferably a central gear wheel).

In a preferred embodiment, the satellite carrier forms part of the secondary planetary system.

In a preferred embodiment, the planetary gear drive is a planetary reducing gear.

In a second aspect, the invention comprises a machine comprising the planetary gear drive according to the first aspect of the invention, preferably wherein the machine is a towed machine, and preferably wherein the machine is a machine towed by the vehicle. In a third aspect, the invention comprises a vehicle comprising the planetary gear drive according to the first aspect of the invention, preferably wherein the vehicle is a machine towed by another vehicle with an auxiliary drive. The invention also comprises the use of the planetary gear drive according to the first aspect of the invention as an auxiliary drive.

In a fourth aspect, the invention comprises a method for coupling and decoupling an auxiliary drive of a vehicle by means of a planetary gear drive according to the first aspect of the invention, comprising the steps:
a) coupling of the satellite carrier to the wheel spindle via the second coupling bush; and
b) decoupling of the satellite carrier from the wheel spindle via the second coupling bush.

In a preferred embodiment, steps a) and b) are performed by a linear shift of the second coupling bush relative to the satellite carrier, preferably via a linear actuator.

In a preferred embodiment, step a) is performed if the speed of the vehicle has a maximum speed vₘₐₓ, and step b) is performed if the speed of the vehicle has at least a minimum speed vₘᵢₙ.

In a fifth aspect, the invention comprises the use of the planetary gear drive according to the first aspect of the invention as a drive for an agricultural machine coupled to an agricultural vehicle, or for towing an agricultural machine by an agricultural vehicle with the drive decoupled.

### DESCRIPTION OF THE FIGURES

Figure 1 is a cross section of a planetary gear drive (100) according to a preferred embodiment of the invention, wherein the satellite carrier (52) is coupled to the wheel spindle (60).
Figure 2 is a cross section of a planetary gear drive (100) according to a preferred embodiment of the invention, wherein the satellite carrier (52) is decoupled from the wheel spindle (60).

### DETAILED DESCRIPTION

As used in the text below, the singular forms "a" and "the" comprise both the singular and the plural form unless the context clearly indicates otherwise.

The terms "comprises" and "comprise"" as used below are synonymous with "inclusive", "include" or "contain", "contains" and are inclusive or open, and do not exclude additional, unnamed members, elements or method steps. The terms "comprise", "comprises" are inclusive of the term "contain".

The lists of numerical values with figure ranges include all values and fractions within these ranges and the end points specified.

The term "approximately" as used when referring to a measurable value such as a parameter, a quantity, a duration etc. is intended to include variations of +/- (10)% or less, preferably +/- 5% or less, more preferably +/- 1% or less, and even more preferably +/- 0.1% or less, of one of the specified values insofar as the variations are suitable for functioning in the disclosed invention. It must be understood that the value to which the term "approximately" refers is itself also disclosed.

Unless otherwise defined, all terms disclosed in the invention, including technical and scientific terms, have the meaning which a person skilled in the art would normally understand. As a further guideline, definitions are given for further explanation of terms which are used in the description of the invention.

The invention comprises in a first aspect all the features of apended claim 1.

As used herein the wheel spindle is generally mounted to a fixed structure such as a vehicle frame, using mounting bolts. The wheel flange as used herein refers to a structure to which the wheel is attached. The wheel is typically held tight to the wheel flange with nuts that thread onto lug bolts protruding from the mounting face of the flange. The lugs then protrude through tapered holes in the wheel as it is mounted to the flange. The nuts, being tapered themselves where they contact the wheel, serve to precisely center and lock the wheel. Wheel flanges and lug nuts are the customary mounting method for wheels on all motor vehicles.

As the present invention relates to drive wheels, the wheel flanges can be mechanically coupled to the wheel spindle through the second coupling bush, thereby creating a mechanism to rotate the wheel flange relative to the wheel spindle, thereby driving the wheel and turning it with a high torque.

Upon decoupling the wheel spindle from the wheel flange (by shifting the second coupling bush) the wheel becomes a free spinning wheel that does not drive the vehicle. The wheels and wheel flanges turn as one assembly together with the planetary gear drive. The different satellite carriers and satellite wheels of the planetary gear drive are not driven but turn together with the wheel and the wheel flange.

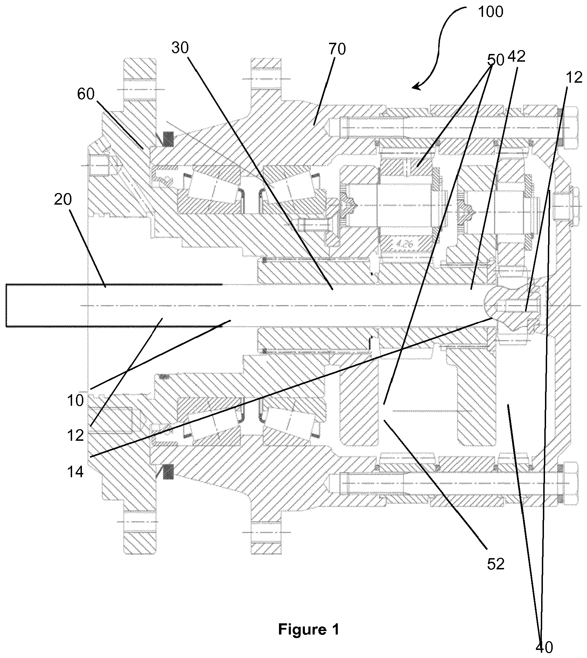

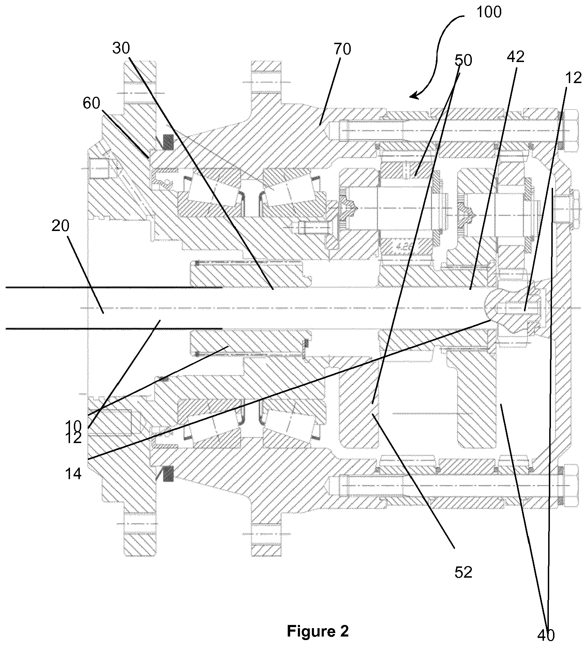

Figure 1 illustrates a cross section of a planetary gear drive (100) according to a preferred embodiment of the invention wherein the satellite carrier (52) is coupled to the wheel spindle (60), while figure 2 illustrates a cross section of the same planetary gear drive (100) according to a preferred embodiment of the invention wherein the satellite carrier (52) is decoupled from the wheel spindle (60).

The planetary gear drive (100) in figures 1 and 2 comprises two planetary systems (40, 50) which determine the rotation ratio of the planetary gear drive (100). In figures 1 and 2, the second coupling bush (30) is configured such that when the satellite carrier (52) is coupled to the wheel spindle (60), rotation of the central shaft (10) relative to the wheel spindle (60) leads to rotation of the wheel flange (70) relative to the wheel spindle (60), wherein the ratio is determined by the two planetary systems (40, 50). In addition, the second coupling bush (30) is configured such that when the satellite carrier (52) is decoupled from the wheel spindle (60), rotation of the central shaft (10) relative to the wheel spindle (60) does not lead to rotation of the wheel flange (70) relative to the wheel spindle (60). Here rotation relative to the wheel spindle (60) is used since this is normally stationary (i.e. does not rotate) relative to the vehicle or machine. When the satellite carrier (52) is decoupled from the wheel spindle (60), this allows the gears of the planetary systems (40, 50) to rotate in the wheel flange (70) without reaching a high rotation speed which would lead to excessive wear.

In a first aspect according to the present invention the wheel spindle is stationary and preferably connected to and mounted onto a fixed structure such as a vehicle frame, preferably using mounting bolts.

In a further particular embodiment according to the present invention, the wheel flange is attached to the wheel.

As illustrated in figures 1 and 2, the second coupling bush (30) is configured to decouple the satellite carrier (52) from the wheel spindle (60) by means of a linear shift of the second coupling bush (30) relative to the central shaft (10), wherein this linear shift is parallel to the central shaft (10). This means that the coupling bush is axially displaceable parallel to the central shaft (10), preferably around the central shaft (10). The central shaft (10) comprises an outer end (12) and an inner end (14). In a preferred embodiment, a linear shift of the second coupling bush (30) towards the inner end (12) ensures coupling between the satellite carrier (52) and the wheel spindle (60). In a preferred embodiment, a linear shift of the second coupling bush (30) towards the outer end (12) ensures decoupling between the satellite carrier (52) and the wheel spindle (60). In a preferred embodiment, a linear shift of the second coupling bush (30) towards the inner end (12) ensures coupling between the satellite carrier (52) and the wheel spindle (60), and a linear shift of the second coupling bush (30) towards the outer end ensures decoupling between the satellite carrier (52) and the wheel spindle (60).

In a preferred embodiment, the planetary gear drive (100) comprises a linear actuator configured to shift the second coupling bush (30) linearly relative to the central shaft (10). In a preferred embodiment, the planetary gear drive (100) comprises a linear actuator configured to shift the second coupling bush (30) linearly relative to the satellite carrier (52).

The position of the linear actuator with regard to the central shaft allows the driver of the vehicle to enable of disable the coupling. The actuation can therefore be controlled by the driver of the vehicle, enabling switching between free wheel driving and motor driven wheels while driving the vehicle. Other configurations of the planetary gear drive often require manipulations while the vehicle is standing still, however this configuration allows for switching by the driver while driving.

In the embodiment illustrated in figures 1 and 2, the planetary gear drive (100) comprises a first planetary system (40), a second planetary system (50) and a central gear wheel (42) which couples the first planetary system (40) to the second planetary system (50). The first planetary system (40) is configured to be driven by the central shaft (10) via the sun wheel (12), and the second planetary system (50) is configured to be driven by the first planetary system (40) by means of the central gear wheel (42). In a preferred embodiment, the satellite carrier (52) forms part of the second planetary system (50). In some embodiments, the planetary gear drive (100) optionally comprises a third planetary system and optionally an additional gear wheel which couples the second planetary system (50) to the third planetary system, wherein the third planetary system is configured to be driven by the second planetary system (50) by means of the additional gear wheel.

The planetary systems (40, 50), also called planetary gear mechanisms, are typically used to integrate a gear mechanism in a small space for high changes in acceleration and for transmitting high power.

In a preferred embodiment, the planetary systems (40, 50) comprise the following gear wheels which engage in each other:
- a sun wheel;
- one or more, preferably 3 or more, for example 4 or 5 satellite wheels (or planet wheels) rotating about the sun wheel;
- a satellite carrier which connects the satellite or planet wheels; and
- a ring with an internal toothing which forms the outer periphery.

A reducing gear typically comprises one or more planetary systems (40, 50), such as 2, 3 or 4 planetary systems. Preferably the satellite wheels have a fixed shaft. Preferably the satellite carrier (52) is not fixed.

The planetary gear drive (100) in figures 1 and 2 comprises two planetary systems (40, 50) which determine the rotation ratio of the planetary gear drive (100). In a preferred embodiment, the planetary gear drive (100) is a planetary reducing gear, preferably a planetary reducing gear with rotating casing. In a preferred embodiment, the gear drive (100) is not a cyclodrive. A planetary reducing gear may typically be used for slow-rotating applications, wherein a high torque is required at low revolutions. In some embodiments, the planetary gear drive (100), preferably a planetary reducing gear, is used in agriculture, the steel industry, transport, forestry and machine construction, for example on all types of tractors and their trailers. In a preferred embodiment, the planetary gear drive (100), preferably a planetary reducing gear, is used to drive machines on wheels, preferably rubber wheels or wheels with rubber tyres.

It should be clear that depending on the position of the second coupling bush (30) the satellite carrier (52) and the wheel spindle (60) are either coupled or decoupled. When coupled to each other the rotation of the central shaft (10) (driven by a motor) will actuate the planetary gear drive (100) by rotating the sun wheel (12), the first planetary system (40), the central gear wheel (42) the second planetary system (50) and the wheel flange (70). In the second planetary system (50) the satellite carrier (52) is rotated and through the second coupling bush (30) the stationary wheel spindle (60) ensures that the wheel flange (70) rotates relative to the wheel spindle (60), thereby driving the wheels. This allows the driving wheels to rotate slowly giving a high torque at a low rotation speed. However, upon driving at larger velocities not requiring the wheels to rotate slowly and provide an additional driving mechanism, the system needs to be decoupled. First the motor needs to be decoupled, otherwise the motor would act as a pump or generator, which could damage it. Decoupling the motor alone is however not sufficient, since on the road speeds of up to 50 kph are still reached, whereby the gear wheels can be rotating at up to 20,000 rpm. This creates secondary wear and can lead to breakage. Therefore an additional decoupling mechanism is provided, decoupling the satellite carrier (52) from the wheel spindle (60) using the second coupling bush (30). When decoupled, the wheel spindle (60) and wheel flange (70) rotate independent relative to each other. Upon decoupling mechanism the second coupling bush (30) the central shaft (10) which is no longer coupled to the motor will rotate together with the wheels and no longer drive the planetary gear drive (100) because the wheel flange (70) and the entire the planetary gear drive (100) rotate with the wheels. This way the planetary gear drive (100) is not actuated and the gearwheels do not rotate at high rpms, limiting wear.

In a second aspect, the invention comprises a machine comprising the planetary gear drive (100) according to the first aspect of the invention, preferably wherein the machine is an agricultural machine.

The machine is preferably a (partly) towed machine (such as a potato, beet or leek harvester), a reaper, or a dung spreader, transport wagon, or driven chassis. Preferably the machine is a towed machine on tyres, more preferably a towed machine on rubber tyres.

In a third aspect, the invention comprises a vehicle containing the planetary gear drive (100) according to the first aspect of the invention, preferably wherein the vehicle is an agricultural vehicle. The central shaft (10) is preferably driven via a motor driven by the towing vehicle, such as a driven electric motor or a hydraulic motor.

The vehicle is preferably a tractor, agricultural tractor, forestry vehicle or other industrial tractor used in airports, docks, mines, agricultural premises etc.

In a fourth aspect, the invention comprises a method for coupling and decoupling a planetary reducing gear (100) according to the first aspect of the invention, or a method for coupling and decoupling an auxiliary drive of a vehicle by means of a planetary gear drive (100) according to the first aspect of the invention, comprising the steps:
a) coupling of the satellite carrier (52) to the wheel spindle (60) via the second coupling bush (30); and
b) decoupling the satellite carrier (52) from the wheel spindle (60) via the second coupling bush (30).

The invention also comprises a method for connecting or disconnecting a planetary reducing gear (100) according to the first aspect of the invention, or a method for connecting or disconnecting an auxiliary drive of a vehicle by means of a planetary gear drive (100) according to the first aspect of the invention, comprising the steps:
a) connection of the satellite carrier (52) to the wheel spindle (60) via the second coupling bush (30); and
b) disconnection of the satellite carrier (52) from the wheel spindle (60) via the second coupling bush (30).

In a preferred embodiment, steps a) and b) are performed by a linear shift of the second coupling bush (30) relative to the central shaft (10), preferably via a linear actuator ( .

In a preferred embodiment, step a) is performed if the speed of the vehicle has a maximum speed vₘₐₓ. In some embodiments, vₘₐₓ is maximum 20 kph, for example maximum 18 kph, for example maximum 16 kph, for example maximum 14 kph, for example maximum 12 kph, for example maximum 10 kph, for example maximum 8 kph, for example 6 kph, for example maximum 4 kph, for example maximum 2 kph, or stopped.

In a preferred embodiment, step b) is performed if the speed of the vehicle has a minimum speed vₘᵢₙ. In some embodiments vₘᵢₙ is at least 10 kph, for example at least 12 kph, for example at least 14 kph, for example at least 16 kph, for example at least 18 kph, for example at least 20 kph, for example at least 25 kph, for example at least 30 kph, for example at least 35 kph, for example at least 40 kph, for example at least 45 kph, for example at least 50 kph.

In some embodiments, vₘᵢₙ = vₘₐₓ. In some embodiments, vₘᵢₙ ≥ vₘₐₓ. In some embodiments, vₘᵢₙ > vₘₐₓ. In some embodiments, vₘₐₓ ≥ vₘᵢₙ. In some embodiments, vₘₐₓ > vₘᵢₙ.

In a fifth aspect, the invention comprises the use of planetary gear drive (100) according to the first aspect of the invention to couple an agricultural machine to or decouple it from an agricultural vehicle. The invention also comprises the use of the planetary gear drive according to the features of appended claim 1 as a drive for an agricultural machine coupled to an agricultural vehicle, or for towing an agricultural machine by an agricultural vehicle with the drive decoupled.

## Claims

1. Planetary gear drive (100) suitable for driving a machine via a vehicle and comprising:
- a central shaft (10);
- a first coupling bush (20), wherein the first coupling bush (20) is configured to drive the central shaft (10) via the vehicle, preferably via a motor of the vehicle;
- a sun wheel (12) coupled to the central shaft (10);
- one or more planetary systems (40, 50) comprising a satellite carrier (52) and two or more satellite wheels, wherein the one or more planetary systems (40, 50) are configured to be driven by the central shaft (10) via a sun wheel (12) for one of the one or more planetary systems (40, 50);
- a wheel spindle (60) and a wheel flange (70); wherein the wheel spindle (60) is stationary; and **characterized in that**;
- a second coupling bush (30), wherein the second coupling bush (30) is configured to couple the satellite carrier (52) of the one or more planetary systems (40, 50) to the wheel spindle (60) and to decouple it from the wheel spindle (60);
wherein the second coupling bush (30) is configured to decouple the satellite carrier (52) from the wheel spindle (60) by means of a linear shift of the second coupling bush (30) relative to the central shaft (10); and,
wherein the planetary gear drive (100) further comprises a linear actuator configured to shift the second coupling bush (30) linearly relative to the satellite carrier (52).

2. Planetary gear drive (100) according to claim 1, wherein the second coupling bush (30) is configured such that when the satellite carrier (52) is coupled to the wheel spindle (60), rotation of the central shaft (10) relative to the wheel spindle (60) leads to rotation of the wheel flange (70) relative to the wheel spindle (60), wherein the ratio is determined by the one or more planetary systems (40, 50).

3. Planetary gear drive (100) according to one of claims 1 or 2, wherein the second coupling bush (30) is configured such that when the satellite carrier (52) is decoupled from the wheel spindle (60), rotation of the central shaft (10) relative to the wheel spindle (60) does not lead to rotation of the wheel flange (70) relative to the wheel spindle (60).

4. Planetary gear drive (100) according to any one of claims 1 to 3, wherein the linear shift is parallel to the central shaft (10).

5. Planetary gear drive (100) according to any of claims 1 to 4, comprising a first planetary system (40), a second planetary system (50), and a gear wheel (42) which couples the first planetary system (40) to the second planetary system (50), wherein the first planetary system (40) is configured to be driven by the central shaft (10) via the sun wheel (12), and wherein the second planetary system (50) is configured to be driven by the first planetary system (40) by means of the gear wheel (42).

6. Planetary gear drive (100) according to claim 5, wherein the satellite carrier (52) forms part of the second planetary system (50).

7. Planetary gear drive (100) according to any of claims 1 to 6, wherein the planetary gear drive (100) is a planetary reducing gear.

8. Machine comprising the planetary gear drive (100) according to any of claims 1 to 7, preferably wherein the machine is a towed machine.

9. Vehicle comprising the planetary gear drive (100) according to any of claims 1 to 7, preferably wherein the vehicle is an agricultural vehicle.

10. Method for coupling and decoupling an auxiliary drive of a vehicle by means of a planetary gear drive (100) according to any of claims 1 to 7, comprising the steps:
a) coupling of the satellite carrier (52) to the wheel spindle (60) via the second coupling bush (30); and
b) decoupling of the satellite carrier (52) from the wheel spindle (60) via the second coupling bush (30).

11. Method according to claim 10, wherein steps a) and b) are performed by a linear shift of the second coupling bush (30) relative to the satellite carrier (52), preferably via a linear actuator.

12. Method according to one of claims 10 or 11, wherein step a) is performed if the speed of the vehicle has a maximum speed vₘₐₓ, and wherein step b) is performed if the speed of the vehicle has at least a minimum speed vₘᵢₙ.

13. Use of the planetary gear drive (100) according to any of claims 1 to 7 as a drive for an agricultural machine coupled to an agricultural vehicle, or for towing an agricultural machine by an agricultural vehicle with the drive decoupled.

## Patentansprüche

1. Planetengetriebe (100), das zum Antrieb einer Maschine über ein Fahrzeug geeignet ist und Folgendes umfasst:
- eine mittlere Welle (10),
- eine erste Kupplungsbuchse (20), wobei die erste Kupplungsbuchse (20) dazu ausgestaltet ist, die mittlere Welle (10) über das Fahrzeug, vorzugsweise über einen Motor des Fahrzeugs, anzutreiben,
- ein an die mittlere Welle (10) gekoppeltes Sonnenrad (12),
- ein oder mehrere Planetensysteme (40, 50), die einen Planetenradträger (52) und zwei oder mehr Planetenräder umfassen, wobei das eine oder die mehreren Planetensysteme (40, 50) dazu ausgestaltet sind, durch die mittlere Welle (10) über ein Sonnenrad (12) für eines des einen oder der mehreren Planetensysteme (40, 50) angetrieben zu werden,
- eine Radnabe (60) und einen Radflansch (70), wobei die Radnabe (60) feststehend ist, **gekennzeichnet durch**
- eine zweite Kupplungsbuchse (30), wobei die zweite Kupplungsbuchse (30) dazu ausgestaltet ist, den Planetenradträger (52) des einen oder der mehreren Planetensysteme (40, 50) an die Radnabe (60) zu koppeln und ihn von der Radnabe (60) zu entkoppeln,
wobei die zweite Kupplungsbuchse (30) dazu ausgestaltet ist, den Planetenradträger (52) durch eine lineare Verschiebung der zweiten Kupplungsbuchse (30) bezüglich der mittleren Welle (10) von der Radnabe (60) zu entkoppeln, und
wobei das Planetengetriebe (100) ferner einen Linearaktuator umfasst, der dazu ausgestaltet ist, die zweite Kupplungsbuchse (30) linear bezüglich des Planetenradträgers (52) zu verschieben.

2. Planetengetriebe (100) nach Anspruch 1, wobei die zweite Kupplungsbuchse (30) so ausgestaltet ist, dass eine Drehung der mittleren Welle (10) bezüglich der Radnabe (60), wenn der Planetenradträger (52) an die Radnabe (60) gekoppelt ist, zu einer Drehung des Radflanschs (70) bezüglich der Radnabe (60) führt, wobei das Verhältnis durch das eine oder die mehreren Planetensysteme (40, 50) bestimmt wird.

3. Planetengetriebe (100) nach einem der Ansprüche 1 oder 2, wobei die zweite Kupplungsbuchse (30) so ausgestaltet ist, dass eine Drehung der mittleren Welle (10) bezüglich der Radnabe (60), wenn der Planetenradträger (52) von der Radnabe (60) entkoppelt ist, nicht zu einer Drehung des Radflanschs (70) bezüglich der Radnabe (60) führt.

4. Planetengetriebe (100) nach einem der Ansprüche 1 bis 3, wobei die lineare Verschiebung parallel zu der mittleren Welle (10) verläuft.

5. Planetengetriebe (100) nach einem der Ansprüche 1 bis 4, umfassend ein erstes Planetensystem (40), ein zweites Planetensystem (50) und ein Zahnrad (42), das das erste Planetensystem (40) an das zweite Planetensystem (50) koppelt, wobei das erste Planetensystem (40) dazu ausgestaltet ist, von der mittleren Welle (10) über das Sonnenrad (12) angetrieben zu werden, und wobei das zweite Planetensystem (50) dazu ausgestaltet ist, von dem ersten Planetensystem (40) mittels des Zahnrads (42) angetrieben zu werden.

6. Planetengetriebe (100) nach Anspruch 5, wobei der Planetenradträger (52) Teil des zweiten Planetensystems (50) bildet.

7. Planetengetriebe (100) nach einem der Ansprüche 1 bis 6, wobei das Planetengetriebe (100) ein Planetenuntersetzungsgetriebe ist.

8. Maschine, umfassend das Planetengetriebe (100) nach einem der Ansprüche 1 bis 7, vorzugsweise wobei die Maschine eine geschleppte Maschine ist.

9. Fahrzeug, umfassend das Planetengetriebe (100) nach einem der Ansprüche 1 bis 7, vorzugsweise wobei das Fahrzeug ein landwirtschaftliches Fahrzeug ist.

10. Verfahren zum Koppeln und Entkoppeln eines Hilfsantriebs eines Fahrzeugs mittels eines Planetengetriebes (100) nach einem der Ansprüche 1 bis 7, umfassend die folgenden Schritte:
a) Koppeln des Planetenradträgers (52) an die Radnabe (60) über die zweite Kupplungsbuchse (30) und
b) Entkoppeln des Planetenradträgers (52) von der Radnabe (60) über die zweite Kupplungsbuchse (30).

11. Verfahren nach Anspruch 10, wobei die Schritte a) und b) durch eine lineare Verschiebung der zweiten Kupplungsbuchse (30) bezüglich des Planetenradträgers (52) vorzugsweise über einen Linearaktuator durchgeführt werden.

12. Verfahren nach einem der Ansprüche 10 oder 11, wobei Schritt a) durchgeführt wird, wenn die Geschwindigkeit des Fahrzeugs eine Höchstgeschwindigkeit vₘₐₓ ist, und wobei Schritt b) durchgeführt wird, wenn die Geschwindigkeit des Fahrzeugs mindestens eine Mindestgeschwindigkeit vₘᵢₙ ist.

13. Verwendung des Planetengetriebes (100) nach einem der Ansprüche 1 bis 7 als ein Antrieb für eine an ein landwirtschaftliches Fahrzeug gekoppelte landwirtschaftliche Maschine oder zum Schleppen einer landwirtschaftlichen Maschine mittels eines landwirtschaftlichen Fahrzeugs, wobei der Antrieb entkoppelt ist.

## Revendications

1. Entraînement à engrenage planétaire (100) adapté à l'entraînement d'une machine par l'intermédiaire d'un véhicule et comprenant :
- un arbre central (10) ;
- une première douille d'accouplement (20), la première douille d'accouplement (20) étant configurée pour entraîner l'arbre central (10) par l'intermédiaire du véhicule, de préférence par l'intermédiaire d'un moteur du véhicule ;
- une roue solaire (12) couplée à l'arbre central (10) ;
- un ou plusieurs systèmes planétaires (40, 50) comprenant un porte-satellite (52) et deux ou plus de deux roues satellites, le ou les systèmes planétaires (40, 50) étant configurés pour être entraînés par l'arbre central (10) par l'intermédiaire d'une roue solaire (12) pour l'un du ou des systèmes planétaires (40, 50) ;
- un axe de roue (60) et un flasque de roue (70) ; l'axe de roue (60) étant stationnaire ;
et **caractérisé par** :
- une deuxième douille d'accouplement (30), la deuxième douille d'accouplement (30) étant configurée pour coupler le porte-satellite (52) du ou des systèmes planétaires (40, 50) à l'axe de roue (60) et pour le découpler de l'axe de roue (60) ;
- la seconde douille d'accouplement (30) étant configurée pour découpler le porte-satellite (52) de l'axe de roue (60) au moyen d'un déplacement linéaire de la seconde douille d'accouplement (30) par rapport à l'arbre central (10) ; et,
- l'entraînement à engrenage planétaire (100) comprenant en outre un actionneur linéaire configuré pour déplacer la deuxième douille d'accouplement (30) linéairement par rapport au porte-satellite (52).

2. Entraînement à engrenage planétaire (100) selon la revendication 1, la deuxième douille d'accouplement (30) étant configurée de telle sorte que lorsque le porte-satellite (52) est couplé à l'axe de roue (60), la rotation de l'arbre central (10) par rapport à l'axe de roue (60) entraîne la rotation du flasque de roue (70) par rapport à l'axe de roue (60), le rapport étant déterminé par le ou les systèmes planétaires (40, 50).

3. Entraînement à engrenage planétaire (100) selon l'une des revendications 1 et 2, la deuxième douille d'accouplement (30) étant configurée de telle sorte que, lorsque le porte-satellite (52) est découplé de l'axe de roue (60), la rotation de l'arbre central (10) par rapport à l'axe de roue (60) n'entraîne pas de rotation du flasque de roue (70) par rapport à l'axe de roue (60) .

4. Entraînement à engrenage planétaire (100) selon l'une quelconque des revendications 1 à 3, le déplacement linéaire étant parallèle à l'arbre central (10).

5. Entraînement à engrenage planétaire (100) selon l'une quelconque des revendications 1 à 4, comprenant un premier système planétaire (40), un deuxième système planétaire (50) et une roue dentée (42) qui couple le premier système planétaire (40) au deuxième système planétaire (50), le premier système planétaire (40) étant configuré pour être entraîné par l'arbre central (10) par l'intermédiaire de la roue solaire (12) et le deuxième système planétaire (50) étant configuré pour être entraîné par le premier système planétaire (40) au moyen de la roue dentée (42).

6. Entraînement à engrenage planétaire (100) selon la revendication 5, le porte-satellite (52) faisant partie du deuxième système planétaire (50).

7. Entraînement à engrenage planétaire (100) selon l'une quelconque des revendications 1 à 6, l'entraînement à engrenage planétaire (100) étant un réducteur planétaire.

8. Machine comprenant l'entraînement à engrenage planétaire (100) selon l'une quelconque des revendications 1 à 7, de préférence la machine étant une machine tractée.

9. Véhicule comprenant l'entraînement à engrenages planétaires (100) selon l'une quelconque des revendications 1 à 7, de préférence le véhicule étant un véhicule agricole.

10. Procédé d'accouplement et de désaccouplement d'un entraînement auxiliaire d'un véhicule au moyen d'un entraînement à engrenage planétaire (100) selon l'une quelconque des revendications 1 à 7, comprenant les étapes suivantes :
a) accouplement du porte-satellite (52) à l'axe de roue (60) par l'intermédiaire de la deuxième douille d'accouplement (30) ; et
b) désaccouplement du porte-satellite (52) de l'axe de roue (60) par l'intermédiaire de la deuxième douille d'accouplement (30).

11. Procédé selon la revendication 10, les étapes a) et b) étant réalisées par un déplacement linéaire de la deuxième douille d'accouplement (30) par rapport au porte-satellite (52), de préférence par l'intermédiaire d'un actionneur linéaire.

12. Procédé selon l'une des revendications 10 et 11, l'étape a) étant réalisée si la vitesse du véhicule a une vitesse maximale vₘₐₓ, et l'étape b) étant réalisée si la vitesse du véhicule a au moins une vitesse minimale vₘᵢₙ.

13. Utilisation de l'entraînement à engrenage planétaire (100) selon l'une quelconque des revendications 1 à 7 comme entraînement d'une machine agricole couplée à un véhicule agricole, ou pour la traction d'une machine agricole par un véhicule agricole avec l'entraînement découplé.
